# EUROPEAN PATENT APPLICATION

(11) **EP 3 031 592 A1**
(43) Date of publication of application: **15.06.2016**
(21) Application number: 15197872.3
(22) Date of filing: 03.12.2015
(51) Int. Cl.: B29C 44/12, E04B 1/76, B29C 47/00

(54) **INSULATION BOARDS AND PRODUCTION THEREOF**

(30) Priority: 11.12.2014 EP 14197435; 24.02.2015 GB 201503052; 25.02.2015 GB 201503151; 26.08.2015 GB 201515167
(71) Applicant: Orac Holding NV, 8400 Oostende (BE)
(72) Inventor: COTTYN, Johan, B-8490 Zerkegem (BE)
(74) Representative: IPLodge bvba

(57) **Abstract**

The application relates to a method for producing an insulation board (10) comprising a rigid plastic foam core having two major surfaces and a facing material on at least one of the major surfaces, the method comprising :
(a) providing a first facing material (1) made from a first material for attachment to one major surface of the core, the first facing material having an interlocking surface structure on one major surface,
(b) applying a second material (2) being a foam-forming mixture to the first facing material so that the second material penetrates into the locking stucture of the first facing material to form a singly faced composite, the second material (2) being susbstantially coextensive with the first facing material (1);
(c) providing a second facing material for application to the foam-forming mixture and attaching the second facing material the the exposed major surface of the core to form a doubly faced composite, the fist facing material (1) comprising either an extruded thermoplastic polymeric foam layer or a laminate of the extruded thermoplastic polymeric foam layer with at least one other facing material, and
(d) foaming and curing the faced foam-forming mixture to produce an insulation board (10). The application further relates to an insulation board (10) and a plurality of buildings.

## Description

This invention relates to insulation boards comprising sheet products including foam, both decorative and/or structural, and more particularly it relates to structurally rigid, sheets or plates including a foam, which are particularly useful in thermal insulating applications. The boards may be used as wall casings such as door jamb or window jamb extenders. It also relates to a method for forming such a product.

### Background

Laminated rigid foam panels are widely used in the building and construction industry as sound and thermal insulating materials and as non-load bearing structural members. These laminated articles having a core of rigid foam can be made continuously or batchwise in a mould. The process of continuous or semicontinuous production usually involves deposition of a foam-forming plastics mixture onto a facing sheet(s) and bringing a second sheet(s) into contact with the mixture before it sets and sometimes before it foams.

Foam itself is a good thermal insulator but can be improved by a sheet of a material like aluminium sheet. While use of impermeable aluminium foil provides an especially high insulation value, a disadvantage associated with its use alone as a facer stems from its fragility, which can result, e.g., in foil breakage during board manufacture. While improved facer toughness can be achieved through the use of fibrous facers, such as conventional medium or heavy Kraft papers or glass mats, these facers are not as good as aluminium foil at providing a barrier against gas penetration. The porosity of fibrous facers allows excessive exposure of the foam material to air with the consequent opportunity for air infiltration into the foam. As is well known in the industry, the thermal conductivity (k-factor) of insulating boards is substantially increased where some means is not provided to prevent such air infiltration into the cells of the foam insulation.

Structural insulated panel (SIP) construction is a method of building construction that employs minimal wood framing and provides a durable continuous insulation. SIPs have a web and flange design that functions like a structural I-beam, offering increased structural integrity. The SIP has a sandwich structure with a core of an insulating material, which functions as the web, between two face sheets, which function as the flanges. The face sheets are typically formed of oriented strand board, a wood material. A SIP can be used for walls and roofs of buildings. The SIP can be pre-fabricated in large panel sizes, leading to construction efficiencies.

Gypsum board or plasterboard is a composite material made from two cover sheets with a gypsum layer typically sandwiched between the cover sheets. Plasterboard is manufactured for use in a variety of applications with each application having specific performance requirements. The plasterboard may be used on internal and external walls of a structure, including areas exposed to water and moisture such as near windows. Unfortunately, the gypsum layer of the plasterboard has a tendency to absorb water. For example, the gypsum layer may absorb up to 40 to 50 parts by weight of water based on 100 parts by weight of the gypsum layer when immersed in water at about 70° F. for two hours. Absorption of water by the gypsum layer may reduce the strength of the plasterboard, increase the vulnerability of the plasterboard to microbial growth, and result in delamination of the cover sheets from the gypsum layer.

The industry has attempted to improve moisture resistance by incorporating moisture resistance components such as wax additives and silicone additives into the plasterboard. Although these additives may be effective at improving the moisture resistance of the plasterboard, each additive has its own disadvantages. For example, wax additives are required in large dosages to effectively improve the water resistance of the plasterboard. Silicone additives negatively interact with soap which is used to create voids in plasterboard and thereby results in increased soap demand during the process. In addition, silicone additives may negatively impact air quality of the environment by increasing VOC emissions, releasing volatile low molecular oligomers and releasing hydrogen gas which is flammable.

Typically, the moisture resistance components are not completely miscible in the slurry which forms the gypsum layer. This incomplete miscibility may negatively impact moisture resistance of the plasterboard.

WO 2011/016962 describes another type of insulating board having a patterned support made from a thermoplastic extruded first foam which is filled with an insulating second foam such as an aerogel.

The inner side walls at the junction between a window and an outside wall is conventionally dealt with by applying several different components such as some thermal insulation, decorative boards, a moisture barrier, metal edge or corner protection and plaster. There are some waiting times, e.g. for glue to harden, sealants to cure, paint to dry. This onsite fabrication can take up to four hours to complete.

### Summary of the invention

It would be desirable if a foam insulation board could be produced with faces which have outstanding toughness, surpassing conventional facing materials, and contribute overall good properties to the foam board such as improved moisture-resistance as well as a method of manufacture of such a board as well as an installation of such a board in a building and a method of mounting the board in a building.

Also for outside wall-window or outside wall-door junctions it is an advantage of some embodiments of the present invention that the installation time can be reduced.

The present invention provides any of: insulation boards comprising sheet products including foam, both decorative and/or structural, and more particularly structurally rigid, sheets or plates including a foam, which are particularly useful in thermal insulating applications. The boards may be used as wall casings such as window jamb extenders. It also relates to a method for forming such a product.

Embodiments of the present invention provide a heat insulating board or plate e.g. comprising a doubly faced composite having two major surfaces. A first part of the plate or board is formed, e.g. machined or extruded, or otherwise formed, from a first material, a major surface of the first part of the board having a structured surface, e.g. having plurality of projections and recesses, or other salient surface portions to make a form stable or locking surface having negative angled cavities, e.g. cavities with ridges with overhangs over the cavities. The depth of such structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%.

Cavities can have a width at the top that is narrower than a width lower in the cavity thus forming. The side walls of the cavities may have re-entrant angles. Into this structured locking surface a second material can be formed thus locking the first material with the second material. This second material is preferably at least a foam layer. The foam layer is preferably made by a foam in place process, or RIM process within a mould. The foam layer is preferably covered with a covering layer. The covering layer preferably allows the board to be fixed by adhesive to a flat surface such as one or more of a masonry surface, a plaster surface, a gypsum-based panel member such as a plaster board surface, a wood surface, a plastic surface or any other flat surface found in the construction of buildings such as a wall structure. As a result, a mechanical interlock having increased bonding strength occurs between the first and second materials. Depending on the materials used and their processing, the second material may also bond or interpenetrate with the first material to increase the strength of the mechanical interlock.

The foamed second material can have a density between 50 - 130 g/l, especially between 60 and 90 g/l, e.g. especially 65 to 70 g/l.

In one aspect of the invention, "dove-tail" or tenon-like projections are provided on one major surface of the board which is made from the first material. The dove-tail projections provide a mechanical interlock when the second material is applied. Each projection can be a dove-tail projection or only a fraction of the projections can be dove-tail projections. The combination of the dove-tail portions and the corresponding shape of the second material provide a mechanical interlock at each combination thereof. The depth of such dovetail or tenon-like structures (in other words the height of the projections or the depth of the cavities) can be, for example, between 1,5 and 50 mm, e.g. dependent on the thickness of the final product. As a percentage of the total thickness of the board, the depth of the structures (in other words the height of the projections or the depth of the cavities) can be between 5 and 30%, e.g. between 10 and 20%.

In another aspect of the invention the projections can be generally trapezoidal in shape. The height of each re-entrant projection may be the same or the re-entrant projections may have different heights.

Plates or boards of embodiments of the present invention can offer a superior combination of durability and thermal insulating properties. The lambda value of the second material such as PUR can lie between 0,027 and 0,029 W/mK. For the first material foam (density approx. 420g/l) the lamda value is between 0,052 and 0,058W/mK.

The board product of the present invention desirably has a thermal conductivity of 33 to 35 milliWatts per meter per Kelvin (mW/m*K).

The first material is used in part of a board having two major surfaces. One major surface which is formed from the first material, forms a first facing material of a board according to embodiments of the present invention. The second material forms an insulating core of a product according to embodiments of the present invention. A covering layer such as to form a second facing material may optionally be applied to the exposed surface of the foamed second material thereby forming a doubly faced composite. This second facing layer may be applied in a foam in place process such as a RIM process in which the second facing material is placed in the mould with a piece made from the first material having the structured interlocking surface and foamable thermoplastic or thermosetting plastic material.

The first and second materials may be preferably moulded together, extruded together, cast together, glued together or pressed together. Any such process is preferably arranged so that the second material flows into the cavities which are part of the structured surface of the first material during manufacture or the second material is made of a softer material than the first material and will flow under pressure into the negative angled cavities between the projections or other salient portions, such as the dove-tail projections of the structured surface of the first material.

In other embodiments an interlayer may be placed in or between the first material and/or the second material. The interlayer may comprise an adhesive material for example or a barrier or a material to improve thermal insulation such as a metal layer like an aluminium foil. The application of interlayer can be by any known suitable process, e.g. similar to joining of the first and second materials described above, e.g. moulding, extrusion, casting etc. but also lamination of a foil.

Any of the embodiments of the present invention can comprise an insulation board made from a duropolymer base such as a foamed expanded styrenic polymer composition (the first material) and a polyurethane (PUR) or polyisocyanurate (PIR) foam layer (the second material).

The following are some aspects of the present invention. First, allowing the second material to penetrate into the structured surface, e.g. the negative angle cavities of the first material, provides a strong mechanical interlock and the foam decreases thermal conductivity of the device. The depth of such structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%. Also the board includes one outer major surface or first facing material which is presented to the viewer as an outer surface after application, this outer major surface is made of the first material which can be made mechanically strong by having a high density. If the first material is also foamed then this outer major surface can be made not only mechanically strong by having a high density but also having a small cell size. On the other hand the inner side of the board is made of the foamed second material which can be blown to a higher blowing ratio thus reducing use of material and providing a good insulation. Optionally a second facing material may be applied to the exposed surface of the second material, e.g. to form a doubly faced composite.

Such a second facing material is preferably selected for the intended specific application of the board. For example, the second facing material can be a foil such as paper or plastic or textile or woven or non-woven textile or a sheet material such as a metallized (such as aluminium) plastic or metallized (such as aluminium) paper or a combination of paper and a metal layer such as aluminium or metallized (such as aluminium) textile or metallized (such as aluminium) non-woven textile. Other foils such as metal (such as aluminium), or wood or wood fibre based sheets or metal (such as aluminium) or plastic plates may find specialised use.

An aim or advantage of some embodiments of the present invention is to achieve a layer enabling the end user to make an excellent adhesion during installation, e.g. allowing the board to be fixed by adhesive to a flat surface such as one or more of a masonry surface, a plaster surface, a plaster board surface, a wood surface, a plastic surface or any other flat surface found in the construction of buildings such as a wall structure.. Secondly such a layer may have a releasing ability from the tooling during production, e.g. during moulding, especially foaming in place in a mould or RIM.

A second facing layer can be made of paper or glass fibres, e.g. in the form of a non-woven or optionally woven sheet such as a sheet, a net, a mat, a scrim or a gauze of non-woven glass fibres. The paper or glass fibre non-woven can be placed in a mould with a piece of the first material having a structured surface and a foaming composition such as based on a styrene foaming composition or a polyurethane composition or similar such that after foaming the paper or glass fibre non-woven is on the inner facing major surface of the insulating board so produced.

Suitable glass fibre non-woven layer have a basis weight in g/m² of 20 to 400. The MD Tensile Strength (N/5cm) can be 50 to 600, a CMD Tensile Strength (N/5cm) of 30 to 400, a thickness (mm) of 0.7 plus or minus 0.5, and an air permeability (l/m²*sec; 20 cm² @1220 Pa) of 20 plus or minus 15. The binder can be, for example but not limited thereto, modified urea formaldehyde and a mineral coating, The Cobb Test (1): value may be Max = 0,10 g.

The second facing layer can be a foil such as paper or plastic or textile or woven or non-woven textile or a sheet material such as a metallized (such as aluminium) plastic or metallized (such as aluminium) paper or a combination of paper and a metal layer such as aluminium or metallized (such as aluminium) textile or metallized (such as aluminium) non-woven textile. Other foils such as metal (such as aluminium), or wood or wood fibre based sheets or metal (such as aluminium) or plastic plates may find specialised use.

A suitable foil for the second facing layer can comprise a gas barrier, e.g. to reduce oxygen or moisture transmission, good thermal resistance, good dimensional stability, and the ability to be adhered to gypsum or particle board or to masonry.

Example foils include a metal layer such as aluminium laminated with paper such as Kraft paper. Such foils can have a weight of between 140 and 220 g/m² as measured at 23°C and 50% RH according to ISO 536. A thickness of between 130 and 250 µm as measured at 23°C and 50% RH according to ISO 534 and wetting tension >40 dyne/cm as measured at 23°C and 50% RH according to ISO 8296.

In an aspect of the present invention a method for producing an insulation board is provided comprising a rigid plastic foam core having two major surfaces and a facing material on at least one of the major surfaces, the method comprising:
(a) providing a first facing material made from a first material for attachment to one major surface of the core, the first facing material having locking grooves on one major surface,
(b) applying a second material being a foam-forming mixture to the first facing material so that the second material penetrates into the locking grooves of the first facing material to form a singly faced composite, the second material being substantially co-extensive with the first facing material;
(c) optionally providing a second facing material for application to the foam-forming mixture and for attachment to the exposed major surface of the core to form a doubly faced composite, the first facing material comprising either an extruded thermoplastic polymeric foam layer or a laminate of the extruded thermoplastic polymeric foam layer with at least one other facing material, and
(d) foaming and curing the faced foam-forming mixture to produce an insulation board.

A preferred second facing material includes or is a paper sheet or a paper and metal layer such as aluminium or includes or is a glass fibre non-woven. A suitable foil for the second facing layer can comprise a gas barrier, e.g. to reduce oxygen or moisture transmission, good thermal resistance, good dimensional stability, and the ability to be adhered to gypsum or particle board or to masonry.

Example foils include a metal layer such as aluminium laminated with paper such as Kraft paper. Such foils can have a weight of between 140 and 220 g/m² as measured at 23°C and 50% RH according to ISO 536. A thickness of between 130 and 250 µm as measured at 23°C and 50% RH according to ISO 534 and wetting tension > 40 dyne/cm as measured at 23°C and 50% RH according to ISO 8296.

The extent of the foil (i.e. a second facing material - any as described in any of the embodiments) as applied to the second foaming material in the finished product can be selected as desired. For example the foil can be co-extensive with the extent of the second foamed material in the finished product. This leaves the edges of the second material free of the foil. Alternatively the foil may extend beyond this extent and can be wrapped around one or more, or two, or three or all four edges of the second foaming material so that one, two, three or four of the edge surfaces of the second foamed material which extend up to the junction with the first facing material are covered by the foil in the final product. An advantage of this embodiment is that the edge surfaces are protected by the foil and can provide good gluing surfaces for attachment to masonry or other building components. The protection may include a water vapour barrier, e.g. a metal such as an aluminium layer being included in or attached to the foil.

In another aspect of the present invention a method for producing an insulation board is provided comprising a rigid plastic foam core having two major surfaces and a facing material on at least one of the major surfaces, the method comprising:
Pre-shaping a foil (described as second facing material of any of the embodiments of the present invention) in an empty mould so that in the final product the foil will extend so that is wrapped around one or more, or two, or three or all four edges of the second foaming material (any of the materials as described above) so that one, two, three or four of the edge surfaces of the second foamed material which extend up to the junction with the first facing material are covered by the foil in the final product.

The foil is optionally clamped in its final position, e.g. by suitable clamps including mechanical clamps, vacuum clamps, toggle claims, etc.

The edges of the mould (i.e. the side edges which run up to the junction with the first facing material can be angled e.g. chamfered in such a way as to ease the demoulding and to be able to put foil on any or some or all of the sides of the second foamed material in the final product. This foil can be used to ensure adhesion of the final product to the plaster, or as a water vapour barrier for example.

The second foaming material is then added to the mould.

The first facing material is placed on top, e.g. supported by the moulds' side lids or mould inserts, with the structured surface facing towards the second material.

The mould is closed and the foaming reaction goes to completion e.g. forming a doubly faced composite.

The product is demoulded after sufficient cooling.

Any excess material is trimmed away, e.g. any oversize of foil material is cut away.

Depending on the required length, ends of the product may be shortened or cleaned up by sawing, laser cutting or by any other cutting method.

A preferred second facing material includes or is a paper sheet or a paper and metal layer such as aluminium or includes or is a glass fibre non-woven. A suitable foil for the second facing layer can comprise a gas barrier, e.g. to reduce oxygen or moisture transmission, good thermal resistance, good dimensional stability, and the ability to be adhered to gypsum or particle board or to masonry.

Example foils include a metal layer such as aluminium laminated with paper such as Kraft paper. Such foils can have a weight of between 140 and 220 g/m² as measured at 23°C and 50% RH according to ISO 536. A thickness of between 130 and 250 µm as measured at 23°C and 50% RH according to ISO 534 and wetting tension > 40 dyne/cm as measured at 23°C and 50% RH according to ISO 8296.

In another aspect of the present invention for a plurality of buildings with window frames and/or door frames in an outer wall,
at least one building has a first outer window or door frame set in at least a first wall selected from the following:
a solid dry wall,
a cavity wall
a dual cavity wall,
a multicavity wall
and
at least one building has a second outer window or door frame set in at least a second wall selected from the following and different from the first wall:
a solid dry wall,
a cavity wall
a dual cavity wall
a multicavity wall
and the first and second window or door frames have a thermally insulating board fixed to inner ide walls of the wall, the thermally insulating board comprising a core of rigid plastic foam having two major surfaces, one major surface being of a first facing material and the other major surface being attached to a second facing material e.g. to form a doubly faced composite, the first facing material comprising an extruded thermoplastic polymeric layer or a composite of an extruded thermoplastic polymeric layer and an insulating foam. The extruded thermoplastic polymeric layer can be a foamed extruded thermoplastic polymeric layer.

The present invention also provides a door jamb or window jamb extender comprising a thermally insulating board a comprising a doubly faced composite having a core of rigid plastic foam having two major surfaces, one major surface being of a first facing material and the other major surface being attached to a second facing material, the first facing material comprising an extruded thermoplastic polymeric layer or a composite of an extruded thermoplastic foamed polymeric layer and an insulating foam, wherein an outer edge of the first facing material has a section of 2 to 5 mm and a higher density than a middle part of the first facing material. The door jamb or window jamb extender can include any of the thermally insulated board of embodiments of the present invention.

These and other features and advantages of this invention are described in, or are apparent from, the following detailed description of various exemplary embodiments of the systems and methods according to this invention.

### BRIEF DESCRIPTION OF THE DRAWINGS

Various exemplary embodiments of the systems and methods of this invention will be described in detail with reference to the following figures, wherein:
FIG. 1 illustrates one exemplary embodiment of an insulating board in accordance with the invention;
FIG. 2 illustrates various surface structures of the first facing material to allow locking to a second foamed material in accordance with an embodiment of the present invention.
FIG. 3 illustrates a production line for forming an insulating board in accordance with an embodiment the present invention.
FIG. 4 shows a schematic window frame and jambs on which is installed an insulating board according to any of the embodiments of the present invention.
FIG. 5 illustrates another exemplary embodiment of an insulating board in accordance with the invention.

### DEFINITIONS

"Cavity" is a hollow space in a material. A hole extending all the way through a material does not fall outside the scope of the term "cavity" provided this hole does not interfere with an interlocking function, i.e. a hole in a first material can be filled with a second material. Although a cavity can be entirely enclosed by a material it is generally used in this description to mean an open cavity. Also foam cells are cavities defined in a polymer matrix, but in the present description cavities are defined in the overall shape of a polymer foam product. Foam cells do not meet that definition as they are not defined by the overall shape of a polymer foam product but are an internal structure.
A cavity can have a "negative angle" of at least one side wall and preferably both side walls of the cavity. In that case the cavities have ridges with overhangs over the cavities. In some embodiments the width of the cavity is narrower at the top compared to a position closer to the bottom of cavity. This provides an interlocking function when another material is formed in the cavity. The side walls of a cavity may include a re-entrant angle. The cavity is typically present in the form of longitudinal groves or channels. The depth of such cavities (in other words the height of the projections or the depth of the cavities) can be, for example, between 1,5 and 50mm, e.g. dependent on the thickness of the final product. As a percentage of the total thickness of the board, the depth of the cavities (in other words the height of the projections or the depth of the cavities) can be between 5 and 30%, e.g. between 10 and 20%.

A "major surface" is a surface of an article that has a planar surface area equal to or greater than any other surface of the article. A major surface can be planar or nonplanar. For example, a major surface can contain grooves and/or projections.

A "non-woven" which can be used with the present invention may be a staple non-woven made by providing cut fibres of a few centimetres length, and put into bales, placed on a conveyor belt and dispersed, e.g. spread in a uniform web by a wetlaid, airlaid, or carding/crosslapping process.

The preferred fibres for use with the present invention are glass fibres. Glass fibre non-wovens can be made by a wetlaid process into mats, gauzes, scrims etc. Glass fibre non-wovens can be wet laid mat with denier fibres in the 6 to 20 micrometre diameter range. Discontinuous fine denier fibres in the 0,1 to 6 range can also be used.

If polymeric fibres are used such as rayon, PET or polypropylene these are preferably treated by corona or plasma treatment to improve the adhesive properties.

The fibres of nonwovens can be bonded either thermally or by using resin. Bonding can be provided throughout the web by resin saturation or for example, overall thermal bonding can be used. Alternatively, bonding can be provided in a distinct pattern via resin printing or thermal spot bonding.

Spunlaid nonwovens are made in one continuous process by spinning and then directly dispersing the fibres into a web by deflectors or can be directed with air streams. Spunboned non-wovens can be combined with meltblown nonwovens,

Any non-woven can be bonded such as
- thermal bonding
- use of a heat sealer
- calendered through heated rollers (called spunbond when combined with spunlaid webs)
- hydro-entanglement: mechanical intertwining of fibres by water jets called spunlace
- ultrasonic pattern bonding
- needle punching or needlefelting: mechanical intertwining of fibres by needles
- chemical bonding (process): use of binders (such as latex emulsion or solution polymers) to chemically join the fibres or use of powders or different fibres that soften and melt to hold other non-melting fibres together.

Paper can be included as a non-woven material.

Non-woven sheets are usually not a uniform fabric. There can be differences between the machine direction, abbreviated MD, and the cross machine direction, abbreviated CD. These differences show up as differences in tensile strength, elongation, tear strength, and fibre orientation.

### DETAILED DESCRIPTION OF EXEMPLARY EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

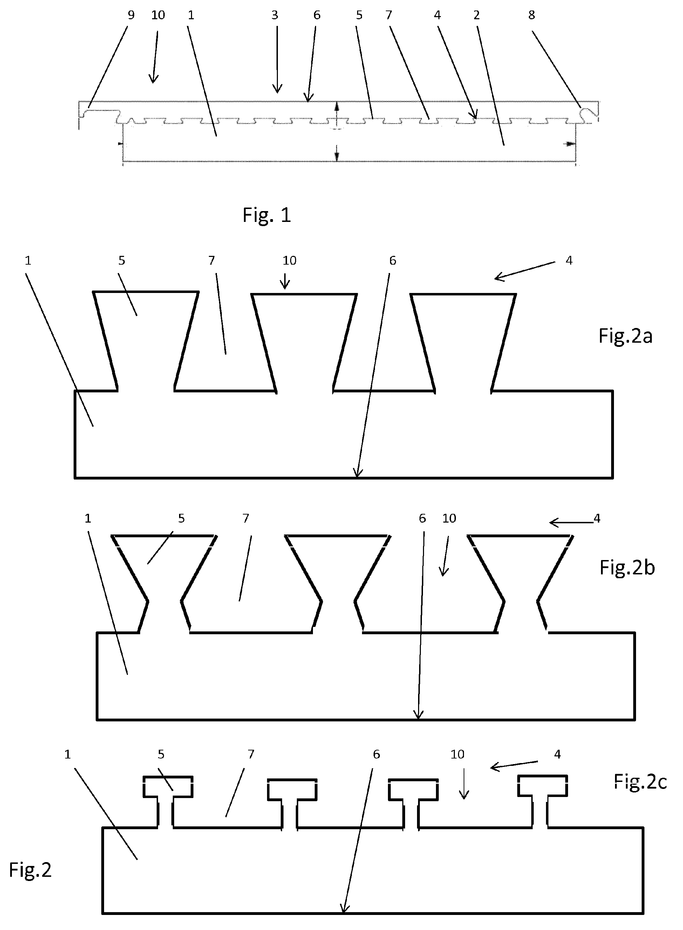

FIG. 1 shows the exemplary insulating board 10 as a joined assembly. FIG. 1 shows a first material 1 interlocked with a second material 2. The first material 1 is essentially a flat plate with a surface structure 3 on one major surface 4. The first material provides a first facing material and the major surface 6, which will be the outer facing side when installed, can be flat. The surface structure 3 forms a mating and locking surface, e.g. in the form of overhanging ridges such as dove-tail projections 5 and cavities 7. Re-entrant or negative angles in at least some of the side walls of the cavities 7 assist in the interlocking function. The mating surface may comprise any other structure which provides an interlocking function. The depth of such interlocking structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%.

The second material is preferably co-extensive or substantially co-extensive with the first material. A part or parts of the first material may be left at one or both ends without the second material for making a joint, for example. For example an edge of the first material may have an edge profile 8 or 9 that is free of second material and may have a customised shape to allow interconnection with another plate or board or with other boards such as plasterboard. The final product could also be used in applying with a wall made out of real plaster. Edge 8 on fig 1 is the edge to be combined with real plaster, edge 9 is the one that will be applied in case of applying plasterboards.

The first material forming the first facing material is preferably a foamed plastic. The foaming reduces weight of polymer used but also can mechanically weaken the product. The first material can be foamed as it is produced e.g. by extrusion. The second material can also be foamed as it is formed onto the first material. In fact the foaming may assist in making the second material penetrate into the re-entrant cavities 7 of the first material. The surface structure, e.g. the dove-tailed projections, can have ridges of the same or different heights. The second foam fills the cavities and extends above them and above the patterned support to create a layer which is substantially co-extensive with the patterned support and has a uniform surface. The structured surface has cavities with ridges with overhangs over the cavities. The cavities can have a width at the top is lower than a width further down into the cavity, or re-entrant cavities of any suitable form, e.g. they could be dove-tails also sometimes called a swallow-tail or a fantail joint.

Edge section 9 and optionally edge section 8 can be made with a material section thickness of between 2 and 5 mm, especially 2 and 4 mm. A thin material provides the advantage that it can easily be disguised with a small amount of material such as plaster. Hence a pleasing installation can be made. But thin sections are weak and can be broken during transport or installation or damaged in use. Any of the embodiments can have strengthened end sections 9 or 8 which have a higher density (lower blowing ratio) than other parts of the board. For example by increase in density the hardness values expressed as Shore D hardness values can be increased by a quarter or a third compared to the adjacent main surface 6. For example the main surface 6 can have a Shore D value of 45 +/- 5 while the thin section end sections 8 or 9 can have a Shore D value of 60 +/- 5. This improvement in strength at the edges means that a metal reinforcing at the corners of the side walls of a window or door facing inwards towards the room is not necessary.

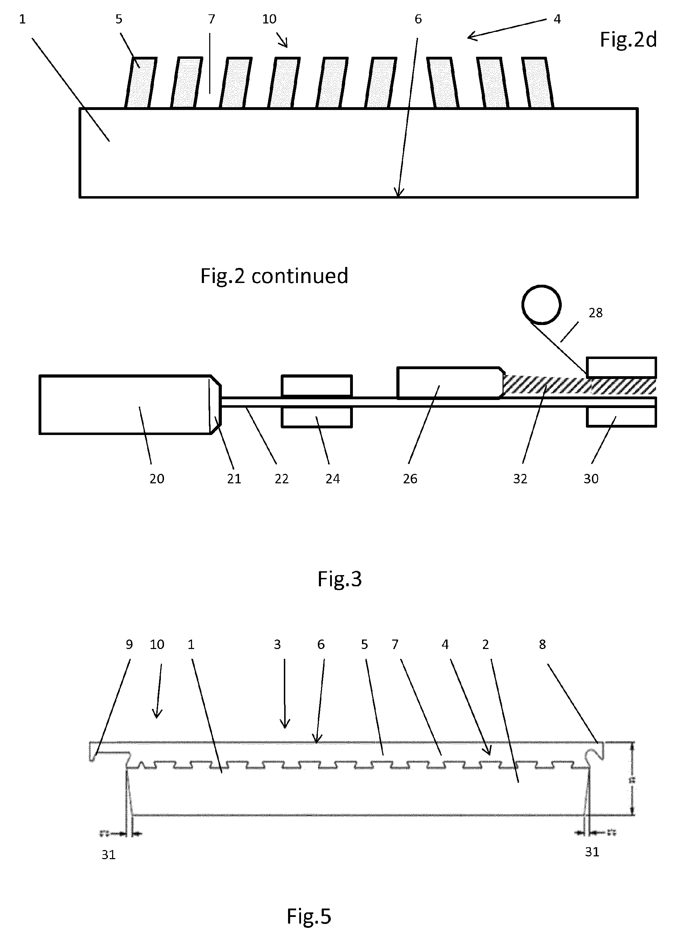

Figs. 2a to c show a selection of various interlocking forms that can be formed on a major surface of the first facing material 1. Fig. 2a shows a conventional dove-tail form whereby a width of the cavity at the top is less than a width further into the cavity. Fig. 2b shows a form similar to Fig. 2a but with re-entrant angles on the cavity walls whereby a width of the cavity at the top is less than a width further into the cavity. Fig. 2b shows "T" shaped structures whereby a width of the cavity at the top is less than a width further into the cavity. Fig. 2d shows a different design with sloping structures where the cavity width remains the same. All the designs shown in Figs. 2a-c have portions of projections in the form of ridges which have overhanging portions that overhang the cavities.

In any of the designs of Fig. 2 or any related designs or ones derived therefrom or equivalent thereto, the depth of such structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%.

Embodiments of the present invention provide a manufacturing method for a board or plate 10 with a layer of a second material, e.g. a second foamed plastic material. Foams are preferred with low thermal conductivity. The second material resides within cavities 7 of the first material, e.g. of an extruded thermoplastic polymer foam. The cavities can also contain one or more than one additional materials, including one or more than one additional barrier material or thermally insulating material, in addition to the second material. One type of desirable additional material can be a barrier foil, e.g. against moisture penetration, or can be an adhesive, e.g. a hot melt adhesive which bonds the first and second materials during processing, or can be gas pocket such as air.

An additional material can be formed or laid on the outer major surface of the second material which is preferably flat. The additional material forms a second facing material which results in a doubly faced composite. Suitable additional materials includes sheets or foils, such as paper, textile, non-woven sheet, glass-fibre non-woven sheet, plastic or metal sheet or metal coated plastic, paper, textile or non-woven foils, either singly or combined together, e.g. laminated. The additional material is typically applied as a foil immediately after the second material has been foamed but while it is still tacky so that the foil bonds. The foil can have a thickness of one to 200 micron. Also in highly specialised applications, relatively rigid materials can be applied such as wood or wood fibre based materials, metals or metallized films having a thickness in a range of 10 micron to 10 mm.

A second facing layer can be made of glass fibres, e.g. in the form of a non-woven or optionally woven sheet such as a sheet, a net, a mat, a scrim or a gauze of non-woven glass fibres. The glass fibre non-woven can be placed in a mould with a piece of the first material having a structured surface and a foaming composition such as based on a styrene foaming composition or a polyurethane composition or similar such that after foaming the glass fibre non-woven is on the inner facing major surface of the insulating board so produced.

Suitable glass fibre non-woven layer have a basis weight in g/m² of 20 to 400. The MD Tensile Strength (N/5cm) can be 50 to 600, a CMD Tensile Strength (N/5cm) of 30 to 400, a thickness (mm) of 0,7 plus or minus 0,5, and an air permeability (l/m²*sec; 20 cm² @1220 Pa) of 20 plus or minus 15. The binder can be, for example but not limited thereto, modified urea formaldehyde and a mineral coating, The Cobb Test (1): value may be Max = 0,10 g.

Water absorptiveness (Cobb value) is the mass of water absorbed in a specific time by a 1 sq. meter sample of material under conditions specified in standard TAPPI T 441.

The foamed second material can have a density between 50 - 130 g/l, especially between 60 and 90 g/l, e.g. 65 to 70 g/l. The foam density of the second material which works well with glass fibre non-wovens is in the range of 50 to 90, e.g. 60 to 80 kg/m³or 70 to 75 g/l.

The second facing material can be a foil such as paper or plastic or textile or woven or non-woven textile or a sheet material such as a metallized (such as aluminium) plastic or metallized (such as aluminium) paper or a combination of paper and a metal layer such as aluminium or metallized (such as aluminium) textile or metallized (such as aluminium) non-woven textile. Other foils such as metal (such as aluminium), or wood or wood fibre based sheets or metal (such as aluminium) or plastic plates may find specialised use.

A preferred second facing material includes or is a paper sheet or a paper and metal layer such as aluminium or includes or is a glass fibre non-woven. A suitable foil for the second facing layer can comprise a gas barrier, e.g. to reduce oxygen or moisture transmission, good thermal resistance, good dimensional stability, and the ability to be adhered to gypsum or particle board or to masonry.

Example foils include a metal layer such as aluminium laminated with paper such as Kraft paper. Such foils can have a weight of between 140 and 220 g/m² as measured at 23°C and 50% RH according to ISO 536. A thickness of between 130 and 250 µm as measured at 23°C and 50% RH according to ISO 534 and wetting tension > 40 dyne/cm as measured at 23°C and 50% RH according to ISO 8296..

The cavities 7 are preferably formed by extrusion of the first material such as a thermoplastic polymer foam but the present invention also includes the possibility that cavities are formed by ridges that are fixed to the first facing material made from the first material using adhesive or ultrasonic welding, for example. In embodiments of the plate or board the cavities are grooves extending along the length dimension of the product. When the second material is applied over the grooves, the second material can penetrate into the grooves and achieve better mechanical interlocking and/or adhesion.

A particular advantage of embodiments of the present invention is that the interlocking structure allows two separate materials to be used which do not usually bond to each other. This increases the number of potential combinations of first and second materials. One of the first and second materials can be extruded or both can be extruded. The depth of such interlocking structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%.

The polymer used to make the foam of either the first and/or second material can be a single polymer type or a mixture or combination of more than one polymer. A polymer can be selected from alkenyl aromatic polymers. Suitable alkenyl aromatic polymers include homo- and copolymers of styrene or substituted styrene. Particularly desirable alkenyl aromatic polymers include styrene homopolymer and styrene- acrylonitrile copolymer.

For the first material styrenic polymer compositions include but are not limited to styrenic homopolymers and copolymers of styrenic compounds and copolymerizable ethylenically unsaturated co-monomers. The styrenic polymer composition may further include minor proportions of non-styrenic polymers. The styrenic polymer composition may be comprised solely of one or more styrenic homopolymers, one or more styrenic copolymers, a blend of one or more of each of styrenic homopolymers and copolymers, or blends of any of the foregoing with a non-styrenic polymer. Regardless of composition, the styrenic polymer material comprises greater than 50 and preferably greater than 70 weight percent of styrenic monomeric units. Most preferably, the styrenic polymer material is comprised entirely of styrenic monomeric units. Suitable styrenic polymers include those derived from styrenic compounds such as styrene, alphamethylstyrene, vinyl benzene, vinyl toluene, chlorostyrene, and bromostyrene. Minor amounts of monoethylenically unsaturated compounds may be copolymerized with styrenic compounds. Examples of copolymerizable compounds include but are not limited to acrylic acid, methacrylic acid, ethacrylic acid, maleic acid, itaconic acid, acrylonitrile, maleic anhydride, methyl acrylate, ethyl acrylate, butyl acrylate, propyl acrylate, methyl methacrylate, vinyl acetate, vinyl alcohol, amides, 1,3-butadiene, 1,3-pentadiene, and 1,4-hexadiene. Preferred structures comprise substantially polystyrene (that is, greater than 80 percent by weight) and most preferably entirely of polystyrene because polystyrene foam is economical, and may form good profiles with smooth surface and sharp edges when used according to embodiments of the present invention. For instance, a general purpose polystyrene (GPPS) is suitable as is a high impact styrene polymer (High Impact Polystyrene).

For instance, the styrenic polymer composition can consist in a blend of a first styrenic polymer having a relatively high melt flow index (MFI) and a second styrenic polymer having a relatively low MFI. The use of such a blend can be advantageous because the lower MFI polymer provides improved strength and/or hardness and the higher MFI polymer is easier to foam and/or permits to obtain profiles with sharper edges and/or sharper details. Playing on the ratio of polymers having different MFI permits therefore to optimize the process and the properties of the obtained foam.

The foaming of the styrenic polymer composition is obtained by incorporating in the styrenic polymer composition at least one blowing agent. The blowing agents used can be at least one of a chemical blowing agent and a physical blowing agent.

A chemical blowing agent is a chemical agent, e.g. particularly a solid but a liquid is not excluded from this invention, which undergoes heat-induced chemical change, e.g. decomposition, in the polymer composition causing formation of a gas. This decomposition is usually triggered by heat, but can alternatively be triggered by the presence of a co-reactant. For instance, a chemical blowing agent could be triggered by the presence of water, whereby water is included in the formulation but only becomes available for chemical reaction upon the addition of heat. E.g. such would be the case for certain hydrated salt compounds mixed with the chemical blowing agent sodium borohydride.

Suitable chemical blowing agents for the polymers mentioned above for the first material, include but are not limited to bicarbonate - acid mixture (e.g. a sodium bicarbonate - citric acid mixture or a sodium bicarbonate - citric acid - citrate mixture), organic acid salts, azodicarbonamide, azobisformamide, azobisisobutyrolnitrile, diazoaminobenzene, 4,4'-oxybis(benzene sulfonyl hydrazide) (OBSH), N,N'-dinitrosopentamethyltetramine (DNPA), sodium borohydride, p-toluenesulfonyl hydrazide, p-toluenesulfonyl semicarbazide, diisopropylhydrazodicarboxylate, 5-phenyl-3,6-dihydro-1,3,4-oxadiazin-2-one, potassium hydrogencarbonate, polycarbonic acid, ammonium carbonate, ammonium carbamate, ammonium acetate, ammonium diethyldithiocarbamate, and other chemical blowing agents well known in the art. Mixtures of chemical blowing agents can be used as well.

One advantage of chemical blowing agents is that they are easy to handle and the carbon dioxide or nitrogen gas typically evolved is relatively inert, non-flammable, and non-toxic. Preferably, the chemical blowing agent used releases CO₂ as a gas upon decomposition. Examples of commercially available CO₂ releasing blowing agents are TRACEL NC 7155 and TRACEL INC 7207F from the firm Tramaco among others. Another option is the type Tracel NC155 from Tramaco. This is not a masterbatch, but pure powder. As far as it is known it contains the same chemical base as the above mentioned Tracel NC7155.

An advantage of CO₂ releasing blowing agents is that they are themselves usually non-toxic, which makes them easy and safe to work with. On the other hand, the CO₂ released gives rise to a slower expansion than N₂.

The chemical blowing agent can be preferably used in a quantity of 0.1 to 3% for example 1.5 to 3% depending upon which agent is used.. The chemical blowing agent may be used pure or in the form of a compound combining the chemical blowing agent as such with additives. For instance, TRACEL NC 7155 is sold under the form of white granules comprising about 70% of the actual blowing agent. The use of such granules has the advantage to enable an easier mixing with the styrenic polymer composition, e.g. when the styrenic polymer composition is also in the form of granules. The use of 1% of TRACEL NC 7155 should therefore be interpreted as the use of 0.7% of chemical blowing agent. Alternatively 1,5 - 3 wt % of NC155 in powder form can be used.

In a desirable embodiment, the blowing agent is free of chlorinated blowing agents and more preferably free of halogenated blowing agents.

If the polymer foam of the first or second material does have some open cell content it is preferred if that is in the body of the material and not close to the surfaces. Closed cells close to a major surface of the first material is desirable to obtain better barrier properties (for example, moisture vapour barrier properties) and strength such as impact resistance than is achievable with open cells in the same position.

The total thickness of the foam insulation boards formed in accordance with the invention may be from about 0,25 to 6,0, preferably 0,5 to 4,25 cm, of which the thickness of the first facing material is generally from about 0,5 cm to 2 cm, and preferably from about 0,75 cm to 1,5 cm. A total thickness of 25mm (for example 9mm PS and 16mm PUR) is preferred for many applications. However greater thicknesses can be used, e.g. up to 150mm. The depth of the interlocking structures (in other words the height of the projections or the depth of the cavities) can be, for example, between 1,5 and 50mm, e.g. dependent on the thickness of the final product. As a percentage of the total thickness of the board, the depth of the structures (in other words the height of the projections or the depth of the cavities) can be between 5 and 30%, e.g. between 10 and 20%.

The second material of the core of the product between the extruded first material and the optional outer foil comprises a rigid foam. The invention is not limited to the nature of the foam material constituting the insulating core, provided that this insures heat insulation. The polymer compositions falling within the ambit of the invention may be broadly selected from any of those which can be blown into foam. The rigid cellular polymers of the invention desirably have a closed cell content of at least about 75%, and more preferably of at least about 85% of the cells. The polymer compositions of the second material may be thermoplastic or thermoset. Suitable polymers include polyurethane, polyisocyanurate, phenolic, rubber, polybutadiene, polyvinyl chloride, polyisoprene, urea-aldehyde, melamine-aldehyde, polystyrene, polyethers, polyimides, polysulphones, polycarbonates, polyetherimides, polyamides, polyesters, silicate resins, polyacetal resins, polyhydantoins, polyvinylidene chloride, polymethyl-methacrylate, polypropylene, polyethylene, polytetrafluoro-ethylene, cellulose acetate, epoxy, acrylonitrile-butadiene-styrene copolymer, silicone, and other copolymers and polymeric types. The blowing or foaming agents are employed in an amount sufficient to give the resultant foam the desired bulk density which is generally in the range would be 50 - 140 g/l preferably between 60 and 90g/l; more preferably between 65 and 70 g/l.

Especially effective foam-forming compositions for use in the invention as the second material are those conventionally employed in forming rigid polyurethane foams, such as closed-cell PIR, PUR, and mixed PUR/PIR foams. Such foam-forming ingredients for the polyurethane and polyisocyanurate foams comprise polyisocyanates, polyfunctional, active hydrogen-containing compounds (e.g., polyester polyols), foaming agents, and catalysts, auxiliaries and additives as required (e.g., a surfactant). Included among such auxiliaries and additives are processing aids, viscosity reducers, flame retardants, dispersing agents, plasticizers, antioxidants, compatibility agents, fillers and pigments.

The polymer used for the first and/or second material can have dispersed therein additives and fillers although the use of fillers should be considered carefully. Fillers can disturb the foaming process as they act as nucleating particles which can lead to instability of the processes. Notwithstanding this comment, suitable additives and fillers can be tried from any of the following or any combination of the following: infrared attenuating agents, for example, carbon black, graphite, metal flake, titanium dioxide; clays such as natural absorbent clays, for example, kaolinite and montmorillonite and synthetic clays; nucleating agents, for example, talc and magnesium silicate; flame retardants, for example, brominated flame retardants such as hexabromocyclododecane and brominated polymers, phosphorous flame retardants such as triphenylphosphate, and flame retardant packages that may including synergists such as, for example, dicumyl and polycumyl; lubricants, for example, calcium stearate and barium stearate; and acid scavengers, for example, magnesium oxide and tetrasodium pyrophosphate. Accordingly a board or plate according to embodiments of the present invention comprises a plate-like extruded first material, e.g. a thermoplastic polymer foam. This first material has a structured surface on one major surface. The other major surface can be flat. The structures surface can include open cavities in that surface. It can also include ridges or projections. In general two projections form the side walls of one cavity.

Extruded thermoplastic polymer foam differs in its characteristics from other types of polymer foams such as thermoset foam and expanded bead foams. In accordance with the present invention the first material can be a thermoplastic foam, a thermoset foam, or an expanded bead foam but extrusion is preferred. In accordance with embodiments of the present invention the extruded thermoplastic polymer foam has closed cells. Generally a closed cell extruded thermoplastic polymer foam is a good thermal insulator. Other important properties for this board are Shore D hardness, scratch resistance and affinity to plaster. A Shore D hardness in the range 40 to 60, e.g. a Shore D hardness of 45 to 50 is preferred (as measured with a durometer type D).

With reference to Figure 3, in accordance with an embodiment of the present invention extruded thermoplastic polymer foam is prepared by extruding a thermoplastic foamable polymer composition from an extruder 20 in a softened state through a die 21 from a zone at a foaming pressure and temperature to an environment at a pressure below foaming pressure and typically below the foaming temperature. The foamable polymer composition forms and extrudate 22 after the die 21 while expanding and cooling to form extruded thermoplastic polymer foam. The extrudate 22 may go through a calibration unit 24. Cavities are defined by the shape of the die 21 used in extruding the thermoplastic polymer foam. Cavities can alternatively be at least partially formed by cold forming and/or hot forming, e.g. by compressing to form one or more than one depression.

A method of extrusion of the first material to form the thermoplastic polymer foam can have the following steps:
a) first form a softened polymer composition in the extruder 20, the polymer composition having a continuous thermoplastic polymer phase by heating the polymer composition to a temperature above its softening temperature (glass transition temperature for amorphous polymers, melting temperature for semicrystalline polymers, and the highest glass transition temperature or melting temperature represented by thermoplastic polymers continuous in the polymer composition if there is a blend of thermoplastic polymers).
b) Add a blowing agent if is not already present. This can be done by introducing a blowing agent into the softened polymer composition in the extruder 20 at an initial pressure that is sufficiently high so as to preclude foaming of the polymer composition. Chemical or physical blowing agents can be used or combinations of these.
c) Optionally cool the foamable polymer composition to a foaming temperature that is still above the softening temperature of the polymer composition,
d) Extrude the foamable polymer composition into an environment having a pressure lower than the initial pressure and a temperature lower than the foaming temperature (e.g. room temperature and pressure).
e) Allow the foamable polymer composition to expand into extruded thermoplastic polymer foam to form a first facing material with a locking structure on one major surface.

Dosing, such as for instance a gravimetric dosing, of the different components is preferably performed.

The extrusion die is preferably constructed so that edge section 9 and optionally edge section 8 can be made with a material section thickness of between 2 and 5 mm, especially 2 and 4 mm. Any of the embodiments can have strengthened end sections 9 or 8 which have a higher density (lower blowing ratio) than other parts of the board. One way of doing this is to cool the regions of the edge section 9 and optionally edge section 8 locally more severely than the cooling for the main surface 6. The effect of this cooling is to stifle expansion and hence to make a higher density foam. Hence in the foaming process the surface of the extrudate at the edge section 9 and optionally edge section 8 is cooled immediately upon exiting the die to a higher degree than for the major surface 6.

This edge cooling suppresses cell formation at the surface of the edge section 9 and optionally edge section 8 creating a hard, high quality finish. As the gasses are evolved rapidly, this suppression of cell formation method is preferably applied simultaneously with calibration of the final shape. An optional process feature is that in the die, a higher temperature can be used in the regions of edge section 9 and optionally edge section 8. Higher temperature allows more gas to escape from the surface thus making a higher density. The higher temperature can also alter the pressure gradient in the die.

The edge section 9 and optionally edge section 8 have a shell/skin that gives theses sections of the product more durability. The surface is improved in strength so that the product resists damage during the shipping, the installation process or use process.

By such increase in density process features, the hardness values expressed as Shore D hardness values can be increased by a quarter or a third compared to the adjacent main surface 6. For example the main surface 6 can have a Shore D value of 45 +/- 5 while the thin section end sections 8 or 9 can have a Shore D value of 60 +/- 5. This improvement in strength at the edges means that a metal reinforcing at the corners of the side walls of a window or door facing inwards towards the room is not necessary.

Where a chemical blowing agent is used it is preferably added to the neat styrenic polymer composition, mixed, and fed into an extruder together with the styrenic polymer composition via the feeder of the extruder. The mixing can for instance be performed in a mixing hopper. The mixture is then heated to a temperature above the Vicat temperature of the styrenic polymer composition to ensure intimate mixing and further heated to the activation temperature of the chemical blowing agent, resulting in decomposition of the chemical blowing agent. The gas formed on activation is substantially dissolved or dispersed in the melt mixture. The temperature and pressure of the system are controlled to maintain substantially a single phase.

The expansion of the thermoplastic of the first material such as a styrenic polymer foam, the extrudate, e.g. the styrenic polymer foam extrudate can be passed through a calibration system 24, and optionally controlled in temperature. In order to reduce friction between the calibration system and the foaming thermoplastic polymer of the first material such as styrenic polymer, one or more of the following can be done: a) the geometry of the calibration unit can preferably be adapted to the changing shape of the die output during foaming, b) the foam surface is preferably kept at a temperature below the Tg of the thermoplastic polymer such as the styrenic polymer, c) the calibration unit is preferably coated on its inside with a low-friction coating. The calibration system preferably participate in the cooling of the foamed polymeric mixture. The thermoplastic polymer of the first material such as the styrenic polymer foam may also pass through a water bath for cooling purpose. The formed thermoplastic polymer foam of the first material such as the styrenic polymer foam is most conveniently pulled by e.g. a haul off or any other motorised pulling device (not shown separately) known from the person skilled in the art. The haul off preferably comprises pads shaped in such a way as to minimize the contact forces of the pads with the surface of the styrenic polymer foam. The thermoplastic polymer foam of the first material such as the styrenic polymer foam has preferably already a stable geometry before it contacts the pulling device (e.g. the haul off pads).

The extruded thermoplastic polymer foams produced according to any embodiments of the present invention may have a surface Shore hardness D of 35 or more. For instance the surface Shore hardness D can be comprised between 35 and 55, e.g. 45 to 50. Shore hardness D can be measured according to NEN-EN-ISO 868, DIN 53505, or ASTM D2240. The structured surface 3 can comprise sharp elements of detail, for example cavities with re-entrant angles on at least one side wall.

The second material is applied to the first material on the major surface which has the structured surface. The application of the second material can be done in a mould. A piece of the first material is placed in a mould and the second material is then added in a non-foamed condition. Then optionally a foil can be placed on top of the second material to form a doubly faced composite. The foil can be any suitable material such as paper, plastic, metal, metallized foil etc. The foil can be paper or plastic or textile or woven or non-woven textile or a non-woven glass fibre sheet, or other sheet material such as a metallized (such as aluminium) plastic or metallized (such as aluminium) paper or a combination of paper and a metal layer such as aluminium or metallized (such as aluminium) textile or metallized (such as aluminium) non-woven textile. Other foils such as metal (such as aluminium), or wood or wood fibre based sheets or metal (such as aluminium) or plastic plates may find specialised use.

The mould is closed to allow the second material to foam. The foil layer serves to cover the still tacky surface of the foamed second material and to act as a release layer to prevent the second material adhering to the mould. It also preferably has an affinity with plaster, and to promote adhesion during installation but does not absorb water and preferably does not support or encourage growth of fungi or bacteria.

The second material can be applied by other means. For example it can be applied by an extrusion or casting technique - see Fig. 3. This can be done in a tandem manner following the extrusion of the first material. In such an arrangement the first material is extruded as an extrudate 22 followed by the second material being deposited on the moving first material where the second material foams. The second material can be extruded or cast from equipment 26 onto the extrudate 22. The product 32 thereof can be held between two tracks of a caterpillar 30 so that the thickness dimension of the product is determined by the distance between the upper and lower caterpillar track. The caterpillar 30 can act as a haul-off. A foil 28 is preferable applied to the top of the foaming second material to prevent sticking to the upper caterpillar track and to form a doubly faced composite. The foil 28 can be any suitable material such as paper, plastic, metal, metallized foil etc. Or the second material can be foamed on lengths of the extruded and cooled first material.

Preferably the foam materials used as the first or second materials are free of chlorinated compounds and preferably free of halogenated blowing agents.

The extruded thermoplastic polymer foam of the first material preferably has an average density of 330 to 500 e.g. a density of 380 to 440 g/l (or kg/m³) in order to possess structural integrity. Measuring average density can be according to ASTM D 1622-08 (Standard Test Method of Apparent Density of Rigid Cellular Plastics).

The extruded thermoplastic foam of the first material can have a graduated density with lower density material in the centre. It is preferable to have a higher density foam proximate to the major surfaces.

The extent of the foil (i.e. a second facing material - any as described above) as applied to the second foaming material in the finished product can be selected as desired. For example the foil can be co-extensive with the extent of the second foamed material in the finished product. This leaves the edges of the second material free of the foil. Alternatively the foil may extend beyond this extent and can be wrapped around one or more, or two, or three or all four edges of the second foaming material so that one, two, three or four of the edge surfaces of the second foamed material which extend up to the junction with the first facing material are covered by the foil in the final product. An advantage of this embodiment is that the edge surfaces are protected by the foil and can provide good gluing surfaces for attachment to masonry or other building components. The protection may include a water vapour barrier, e.g. a metal such as an aluminium layer being included in or attached to the foil.

In another aspect of the present invention a method for producing an insulation board is provided comprising a rigid plastic foam core having two major surfaces and a facing material on at least one of the major surfaces, the method comprising:
Pre-shaping a foil (described as second facing material above) in an empty mould so that in the final product the foil will extend so that is wrapped around one or more, or two, or three or all four edges of the second foaming material (any of the materials as described above) so that one, two, three or four of the edge surfaces of the second foamed material which extend up to the junction with the first facing material are covered by the foil in the final product.

The foil is optionally clamped in its final position, e.g. by suitable clamps including mechanical clamps, vacuum clamps, toggle claims, etc.

The edges of the mould (i.e. the side edges which run up to the junction with the first facing material can be angled - see reference number 31 of FIG. 5. e.g. chamfered in such a way as to ease the demoulding and to be able to put foil on any or some or all of the sides of the second foamed material in the final product and to thereby form a doubly faced composite. This foil can be used to ensure adhesion of the final product to the plaster, or as a water vapour barrier for example. This is shown schematically in FIG. 5 wherein the references numbers refer to the identical materials and features as described with reference to Fig. 1.

The first facing material is placed on top, e.g. supported by the moulds' side lids or mould inserts.

The mould is closed and the foaming reaction goes to completion.

The product is demoulded after sufficient cooling.

Any excess material is trimmed away, e.g. any oversize of foil material is cut away.

Depending on the required length, ends of the product may be shortened or cleaned up by sawing, laser cutting or by any other cutting method.

A preferred second facing material includes or is a paper sheet or a paper and metal layer such as aluminium or includes or is a glass fibre non-woven. A suitable foil for the second facing layer can comprise a gas barrier, e.g. to reduce oxygen or moisture transmission, good thermal resistance, good dimensional stability, and the ability to be adhered to gypsum or particle board or to masonry.

Example foils include a metal layer such as aluminium laminated with paper such as Kraft paper. Such foils can have a weight of between 140 and 220 g/m² as measured at 23°C and 50% RH according to ISO 536. A thickness of between 130 and 250 µm as measured at 23°C and 50% RH according to ISO 534 and wetting tension > 40 dyne/cm as measured at 23°C and 50% RH according to ISO 8296.

Devices made in accordance with embodiments of the present invention can comprise:
Layer 1: an extruded thermoplastic layer with a re-entrant structured surface on one major surface. Can be used as a jamb for such as a window or door. It can be finished with plaster or plasterboard. The end sections (edge section 9 and optionally edge section 8) can be made with a higher density such as Shore D values that are a quarter or a third higher than the middle sections, e.g. the main surface 6 can have a Shore D value of 45 +/- 5 while the thin section end sections 8 or 9 can have a Shore D value of 60 +/-5. This improvement in strength at the edges means that a metal reinforcing at the corners of the side walls of a window or door facing inwards towards the room is not necessary.
Layer 2: the second formed material enters into the re-entrant structured surface and functions as a thermal insulation improver
Layer 3: a foil layer such as paper or a glass fibre based sheet which is flexible is preferred to thereby form a doubly faced composite. For specialised applications this foil layer can be thicker and even rigid. This layer has two potential functions: it serves to cover the still tacky surface of the foamed second material and it improves the adhesion properties of the final product onto walls such as the brickwork.

Plates or boards of embodiments of the present invention can offer a superior combination of durability and thermal insulating properties. The lambda value of the second material such as PUR can lie between 0,027 and 0,029 W/mK. For the first material foam (density approx. 420g/l) the lamda value is between 0,052 and 0,058W/mK.

The board product of the present invention desirably has a thermal conductivity of 33 to 35 milliWatts per meter per Kelvin (mW/m*K).

Plates or boards according to embodiments of the present invention can have edges that have specific profiles or shapes, e.g. to allow them to fixed or "clicked" together. For example, opposing edges of the board or plate can have mating tongue and groove shapes. Profiling of the edges can be done at the time of manufacture or subsequently by machining. The main surface 6 can have a Shore D value of 45 +/- 5 while the thin section end sections 8 or 9 can have a Shore D value of 60 +/- 5. This improvement in strength at the edges means that a metal reinforcing at the corners of the side walls of a window or door facing inwards towards the room is not necessary.

The outer surface of the first material can have a planar surface or a contoured surface. The second material in the cavities preferably also defines a flat major outer surface.

Devices of the present invention are particularly useful as thermal insulating materials. One method of using the devices is to position the device as a window jamb. The device provides thermal insulation and is also resistant to moisture while providing one major surface (first facing material) that can be painted and the other surface (second facing material to thereby form a doubly faced composite) for adhering to a wall of a building.

Alternatively, devices of the present invention can be positioned on a wall of a building structure to thermally insulate the inside of the structure from the outside of the structure.

Embodiments of the present invention relate generally to window jambs and in particular to a wall casing or jamb extender so that windows are suitable for installation into window openings having different wall thicknesses. In these embodiments the present invention provides a wall casing or a jamb extender for the sides and optional the top and/or bottom side (head jamb and sill extenders) of the window assembly.

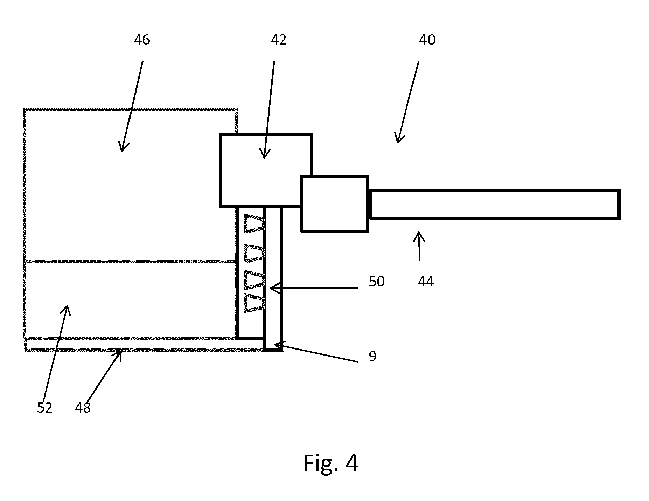

With reference to FIG. 4 a typical window assembly 40 comprises a window frame set in a wall 46 and a fixed or movable window part 44 installed within the frame. The window frame has side jambs 42, a header or top jamb (not shown), and a window sill (not shown). Typically the window frame will be rectangular or square. Insulation boards 10 of the types described above with respect to any of the embodiments of the present invention form wall casings or jamb extenders 50 and are applicable to a wide variety of windows.

In embodiments of the present invention, a wall casing or jamb extender 50 can abut the inner face of the window frame jambs 42 e.g. to prevent cold bridges. If necessary any space can be filled with insulating material such as putty. The wall casings or jamb extenders 50 are fixed to the walls on the wall surfaces which extend inwards towards the room where the window is installed.

For each window typically two vertical wall casings or jamb extenders 50 are used, one for each of vertical side walls. These wall casings or jamb extenders 50 are made of any of the boards as described above, each having side edges that can be formed with an end shape 8 that is used to provide a link to another board or an end shape 9 to co-operate with a plaster board 48 or plaster on the inner wall 52 of the room. The two side wall casings or jamb extenders 50 have a length cut to match the corresponding lengths of the side jambs 42. Optionally a top header extender can be provided having a length corresponding to the length of the top jamb, and a bottom sill extender having a length corresponding to the length of the sill.

The wall casings or jamb extenders 50 are glued to the side walls 46, 52 whereby the inner face is formed by a covering layer such as a glass fibre non-woven as described above. This avoids the necessity to use mechanical fixing means such as clamps which are bulky and possibly unsightly, or screws or bolts which are liable to rust and require the concealment of the head portion. To attach the wall casings or jamb extenders 50 to the window, the wall casings or jamb extenders 50 are cut to the required length and width and then installed on the side walls abutting the vertical jambs 32 of the window frame. The high quality facing of the first material provides an aesthetic appearance unbroken by the heads, bolts, screws or nails.

The main surface 6 can have a Shore D value of 45 +/- 5 while the thin section end sections 8 or 9 can have a Shore D value of 60 +/- 5. This improvement in strength at the edges means that a metal reinforcing at the corners of the side walls of a window or door facing inwards towards the room is not necessary.

The insulating boards of any of the embodiments of the present invention can be used in a door a for example. The door frame has side jambs, a header or top jamb, and a sill. Typically the door frame will be rectangular. Insulation boards 10 of the types described above with respect to any of the embodiments of the present invention form wall casings or jamb extenders and are applicable to a wide variety of door frames.

In embodiments of the present invention, a wall casing or jamb extender can abut the inner face of the door frame jambs as described above for windows. Generally there will be a variety of house or building designs in any region. These house or building designs usually have a variety of wall designs such as dry walls, cavity walls, dual cavity walls or multicavity walls. A cavity wall consists of two 'skins' separated by a hollow space or cavity. The skins are commonly masonry such as brick or concrete block. A dual cavity wall has three skins and two cavities. Cavity walls are described as double leaf walls, dual cavity as triple leaf walls and triple cavity walls as quadruple leaf. Any of the embodiments of board 1 is fit for use to all kind of walls (with or without cavity).

Thermal bypass is where heat bypasses insulation and escapes to the internal or external environment. This can occur where a cavity in a wall is able to communicate with the internal or external environment, thus causing heat loss from a location in the building. Thermal bypasses can render an insulation layer completely irrelevant to the flow of heat in localised areas and significantly worsen the energy efficiency of the building. The boards 1 according to any of the embodiments of the present invention can provide edge thermal sealing to eliminate the possibility of air movement from a cavity in the wall to the internal environment, or vice versa. The insulating layer 2 tightly butts against a cavity and additional edge sealing will not be required. The boards 1 according to any of the embodiments of the present invention can provide edge thermal sealing in the case of dual cavity walls. The insulating layer 2 will bridge from one cavity to the other and hence form an adequate thermal edge seal. A cavity wall consists of two 'skins' separated by a hollow space or cavity. The skins are commonly masonry such as brick or concrete block. A dual cavity wall has three skins and two cavities. Cavity walls are described as double leaf walls, dual cavity as triple leaf walls and triple cavity walls as quadruple leaf. The boards 1 according to any of the embodiments of the present invention can also be used with multicavity walls or dry walls.

In such buildings as described above, moisture can accumulate when the rate of moisture entry into an assembly exceeds the rate of moisture removal. When moisture accumulation exceeds the ability of the assembly materials to store the moisture without degrading performance or long term service life, moisture problems result. Any of the embodiments of the present invention address these wetting mechanisms. In case of condensation, the insulating layer 2 isolates the outer surface 6 from having a low temperature of an outer wall and this prevents condensation. The temperature of the condensing or moisture accumulation surface is important. How cold the outer surface 6 becomes depends upon the insulation and the temperature of a wall or cavity and this determines how much moisture accumulates on the surface 6 and the risk of mould growth. The colder this surface 6, the more moisture that accumulates; the warmer this surface 6 the less moisture that accumulates. Therefore, this temperature (which is based on the thermal resistance of the board 1 as a whole) also determines how much resistance to water vapour entry from the interior can be allowed.

Any of the embodiments of the present invention can include a vapour barrier such as a layer of aluminium or metallised non-woven, metallised paper, or laminate of a metal layer such as aluminium with a non-woven, paper etc.

Any of the embodiments of board 1 are bifunctional and are usable for plaster or plasterboard. Any of the embodiments of board 1 is fit for use in new-build and renovation.

Accordingly a region can have plurality of buildings with window frames and/or door frames in an outer wall, wherein
at least one building has a first outer window or door frame set in at least a first wall selected from the following:
a solid dry wall,
a cavity wall
a dual cavity wall,
a multicavity wall
and
at least one building has a second outer window or door frame set in at least a second wall selected from the following and different from the first wall:
a solid dry wall,
a cavity wall
a dual cavity wall
a multicavity wall
and the first and second window or door frames have a thermally insulating board fixed to inner side walls of the window, the thermally insulating board comprising a core of rigid plastic foam having two major surfaces, one major surface being of a first facing material and the other major surface being attached to a second facing material to thereby form a doubly faced composite, the first facing material comprising an extruded thermoplastic foamed polymeric layer or a composite of an extruded thermoplastic foamed polymeric layer and an insulating foam.

The boards may include a vapour barrier. The boards are bifunctional and at least one wall is finished in plaster and another wall is finished with plasterboard.

Certain modifications and improvements will occur to those skilled in the art upon a reading of the foregoing description. It should be understood that all such modifications and improvements have been deleted herein for the sake of conciseness and readability but are properly within the scope of the following claims.

## Claims

1. A method for producing an insulation board comprising a rigid plastic foam core having two major surfaces and a facing material on at least one of the major surfaces, the method comprising:
(a) providing a first facing material made from a first material for attachment to one major surface of the core, the first facing material having an interlocking surface structure on one major surface,
(b) applying a second material being a foam-forming mixture to the first facing material so that the second material penetrates into the locking structure of the first facing material to form a singly faced composite, the second material being substantially co-extensive with the first facing material;
(c) providing a second facing material for application to the foam-forming mixture and attaching the second facing material to the exposed major surface of the core to form a doubly faced composite, the first facing material comprising either an extruded thermoplastic polymeric foam layer or a laminate of the extruded thermoplastic polymeric foam layer with at least one other facing material, and
(d) foaming and curing the faced foam-forming mixture to produce an insulation board.

2. A method according to claim 1, wherein applying a second material being a foam-forming mixture to the first facing material includes moulding.

3. A method according to claim 1 or 2, wherein the interlocking surface structure comprising ridges and cavities whereby for at least some of the cavities, the ridges have overhanging parts which overhang the cavities.

4. A method according to claim 3, such that a width of a cavity at a higher position in the cavity is smaller than a width at a lower position of the cavity.

5. A method as claimed in any previous claim wherein either or both of the first and second facing materials comprise a multi-layered laminate, or
the second facing material includes or is a paper sheet or a paper and metal layer such as aluminium or includes or is a glass fibre non-woven or
the second facing material comprises aluminium laminated with paper such as Kraft paper and having a weight between 140 and 220 g/m², a thickness of between 130 and 250 µm and wetting tension >40 dyne/cm, or
the second facing material is a paper sheet or a glassfibre fabric such as a non-woven.

6. A method as claimed in any previous claim wherein the foam-forming mixture comprises a mixture for forming a rigid polymer foam selected from the group of polyurethane and polyisocyanurate foams.

7. A method as claimed in any of the preceding claims wherein the first facing layer or layers comprise a styrenic polymer composition.

8. A method as claimed in any of the preceding claims, including the steps of:
pre-shaping the second facing material in an empty mould so that in the final product the foil will extend so that it is wrapped around one or more, or two, or three or all four edges of the second material so that one, two, three or four of the edge surfaces of the second foamed material which extend up to the junction with the first facing material are covered by the foil in the final product,
the second material to be foamed is then added to the mould,
the first facing material is placed on top with a structured surface facing towards the second material,
the mould is closed and the foaming reaction goes to completion, and
the product is demoulded after sufficient cooling.

9. The method of claim 8, wherein the side edges of the mould which will run up to the junction with the first facing material in the final product, are angled or chamfered in such a way as to ease the demoulding and to be able to put foil on any or some or all of the sides of the second foamed material in the final product.

10. A thermally insulating board comprising a doubly faced composite having a core of rigid plastic foam having two major surfaces, one major surface being attached to a first facing material and the other major surface being attached to a second facing material, the first facing material comprising an extruded thermoplastic foamed polymeric layer or a composite of the extruded thermoplastic foamed polymeric layer with at least one other facing material, the first facing material having an interlocking surface structure on one major surface, and wherein the rigid plastic foam penetrates into the interlocking structure.

11. A thermally insulating board according to claim 10, wherein the interlocking surface structure comprises ridges and cavities whereby for at least some of the cavities, the ridges have overhanging parts such that a width of a cavity at a higher position in the cavity is smaller than a width at a lower position of the cavity.

12. A thermally insulating board as claimed any of claims 10 or 11 wherein the second facing material is made of paper or a glass fibre fabric such as a non-woven, or
the second facing material includes or is a paper sheet or a paper and metal layer such as aluminium or includes or is a glass fibre non-woven or
the second facing material comprises aluminium laminated with paper such as Kraft paper and having a weight between 140 and 220 g/m², a thickness of between 130 and 250 µm and wetting tension >40 dyne/cm, or
the second facing material is a paper sheet or a glassfibre fabric such as a non-woven.

13. A thermally insulating board as claimed in any of claims 10 to 12 wherein the extruded thermoplastic foamed polymeric layer of the first facing material comprises a styrenic polymer or
wherein the rigid plastic foam comprises a polymer foam selected from the group of polyurethane and polyisocyanurate foams.

14. A thermally insulated board as claimed in any of the claims 10 to 13, wherein the second facing material extends onto any or some or all of the sides of the second foamed material in the final product.

15. A thermally insulated board as claimed in any of the claims 10 to 14, wherein an outer edge of the first facing material has a section of 2 to 5 mm and a higher density than a middle part of the first facing material.

16. A wall casing or door jamb or window jamb extender comprising a thermally insulating board in accordance with any of the claims 10 to 15.

17. A plurality of buildings with walls and window frames and/or door frames in an outer wall, wherein
at least one building has a first outer window or door frame set in at least a first wall selected from the following:
a solid dry wall,
a cavity wall
a dual cavity wall,
a multicavity wall
and
at least one building has a second outer window or door frame set in at least a second wall selected from the following and different from the first wall:
a solid dry wall,
a cavity wall
a dual cavity wall
a multicavity wall
wherein the first and second window or door frames both have a thermally insulating board as a door jamb or window jamb extender fixed to inner side walls of the first and second window, the thermally insulating board comprising a doubly faced composite having a core of rigid plastic foam having two major surfaces, one major surface being of a first facing material and the other major surface being attached to a second facing material, the first facing material comprising an extruded foamed thermoplastic polymeric layer or a composite of an extruded foamed thermoplastic polymeric layer and an insulating foam.

18. The plurality of buildings according to claim 17, wherein the thermally insulated board is any of the boards of claims 10 to 15.
